Europäisches Patentamt

European Patent Office

Office européen des brevets

(19)

(11) Numéro de publication: **0 228 321**
**B1**

## FASCICULE DE BREVET EUROPEEN

(12)

(45) Date de publication du fascicule du brevet:
08.08.90

(51) Int. Cl.⁵: **H02G 13/00**

(21) Numéro de dépôt: **86402559.8**

(22) Date de dépôt: **19.11.86**

(54) **Procédé de protection contre la foudre, moyens pour la mise en oeuvre de ce procédé et matériel de protection contre la foudre.**

(30) Priorité: **26.11.85 FR 8517813**

(43) Date de publication de la demande:
**08.07.87 Bulletin 87/28**

(45) Mention de la délivrance du brevet:
**08.08.90 Bulletin 90/32**

(84) Etats contractants désignés:
**AT BE CH DE ES FR GB GR IT LI LU NL SE**

(56) Documents cités:
**EP-A- 0 096 655**
**EP-A- 0 139 575**
**FR-A- 907 037**
**GB-A- 2 146 851**

(73) Titulaire: **INDELEC SARL, 61 Chemin des Postes,**
**F-59500 Douai(FR)**

(72) Inventeur: **Lefort, Louis, 143 rue Férin,**
**F-59500 Douai(FR)**
Inventeur: **Lefort, Monique, 143 rue Férin,**
**F-59500 Douai(FR)**
Inventeur: **Lambin, Bernard, 98 Bis avenue St Maur,**
**F-59110 La Madeleine(FR)**
Inventeur: **Boilloz, Pascal, 141 Boulevard Jeanne D'Arc,**
**F-59500 Douai(FR)**

(74) Mandataire: **Ecrepont, Robert, Cabinet**
**Ecrepont 12 Place Simon Vollant, F-59800 Lille(FR)**

ACTORUM AG

## Description

L'invention se rapporte à un procédé de protection contre la foudre.

Elle se rapporte également aux moyens pour la msie en œuvre de ce procédé et aux matériels de protection contre la foudre pourvus de ces moyens, tels des installations qui, par temps d'orage, assurent un délestage préventif d'installations importantes et, bien entendu, elle se rapporte plus particulièrement mais non exclusivement aux paratonnerres.

Si par beau temps, le champ électrique au sol est de l'ordre d'une centaine de volts par mètre, à l'approche d'un nuage orageux ce champ subit une phase de modification: il est généralement inversé puis augmente dans des proportions énormes.

A ce moment là, pour un sol plat, le champ peut atteindre plus de dix mille volts par mètre, la différence de potentiel entre la base du nuage et le sol étant alors de plusieurs dizaines de millions de volts.

Malgré cette énorme différence de potentiel, et le début de l'ionisation de l'air qui résulte de place en place, de la libération de charges électriques, la décharge principale ne peut toujours pas se déclencher spontanément à travers l'immense couche d'air qui forme encore un bon isolant; il n'y a alors pas encore de menace réelle de chute de la foudre.

La décharge principale correspondant à la chute de la foudre ne pourra s'amorcer tant que le champ atmosphérique ne subira pas une nouvelle phase de modification dans laquelle il subira une brutale augmentation qui le rendra apte à amorcer l'effet dit "corona" c'est-à-dire à former des décharges de faible intensité, dites "tracteurs" ou "précurseurs" aptes à créer entre le nuage et le sol un canal conducteur formé d'air partiellement ionisé.

Il est par ailleurs connu que la moindre aspérité sur le sol agit comme un concentrateur de champ qui, selon sa forme plus ou moins allongée vers le haut, peut multiplier la valeur du champ plusieurs centaines de fois et anticiper autour d'elle l'émission de charges électriques.

C'est ainsi qu'un champ ambiant de l'ordre de dix mille volts par mètre peut déjà, du fait de cette concentration, dite "effet par pointe" être porté autour de l'aspérité, à une valeur suffisante pour amorcer l'effet corona c'est à dire provoquer à la pointe de l'aspérité une émission intense d'étincelles encore floues qui se manifestent sous la forme d'effluves ou aigrettes lumineuses.

Avec la hauteur de la pointe et surtout avec l'augmentation du champ atmosphérique, ces aigrettes s'amplifient et deviennent de véritables étincelles.

Ce sont elles qui en s'élevant laissent chacune derrière elle un canal conducteur formé d'air partiellement ionisé réalisant le "traceur" ou "précurseur" ascendant qui, en montant par bonds successifs à une vitesse de l'ordre de vingt kilomètres par seconde, peut atteindre le nuage ou l'un des "traceurs" ou "précurseurs" descendants issus de celui-ci et terminer ainsi le canal conducteur au travers duquel pourra alors s'écouler la décharge principale.

C'est bien entendu cet effet de pointe qui est utilisé dans les paratonnerres qui, dans leur version la plus simple consistent en une pointe conductrice située à une certaine hauteur du sol; elle est reliée à la terre par un conducteur dit "descente de paratonnerre".

Mais si une telle pointe dite "inerte" s'avère dans certains cas efficace, on peut aussi constater de nombreux autres cas où la foudre, surtout lorsqu'elle est de faible intensité, tombe à proximité immédiate de cette pointe du fait de la présence d'autres aspérités telles un clocher, un mât etc ... qui ont plus rapidement qu'elle produit le même effet.

C'est pourquoi, depuis longtemps, on a utilisé en combinaison avec une pointe classique, des moyens destinés à faire en sorte que, avant les aspérités inertes avoisinantes, à la pointe du paratonnerre, des charges électriques soient émises afin de tenter d'amorcer l'effet corona, donc de former des "traceurs" ascendants et de creuser des canaux formés d'air partiellement ionisé qui rattraperont le nuage ou un "précurseur" descendant et ce, le plus haut possible dans le ciel de manière à élargir la zone ainsi placée sous la protection de la pointe.

Parmi ces moyens connus, certains agissent par au moins une électrode, tandis que d'autres agissent directement sur la pointe du paratonnerre.

Avec les moyens connus à ce jour agissant par au moins une électrode, celle-ci est disposée à faible distance de la pointe reliée à la terre et elle est alimentée de manière qu'une décharge électrique s'établisse entre l'électrode et la pointe et provoque une émission complémentaire de charges électriques, d'électrons, s'ajoutant ainsi à l'émission de la pointe prise isolément et qui, comme elle, produira l'ionisation par choc de l'air présent autour de la pointe.

Avec ces moyens connus (EP-A 96 655), l'alimentation s'opère par temps d'orage à l'aide d'un organe de prise du potentiel atmosphérique qui, dès que l'air est au moins faiblement ionisé, capte une tension avec laquelle l'électrode est directement alimentée de manière que, sous l'effet de la différence de potentiel entre l'électrode et la pointe raccordée à la terre, s'établisse la décharge.

Malheureusement, même si ce principe de la prise de potentiel est bon, la quantité d'énergie disponible est très faible et de plus l'émission complémentaire pourra n'avoir lieu qu'avec un retard de l'ordre de quelques dizaines de microsecondes, par rapport au moment où le champ atmosphérique aura atteint la valeur suffisante à l'amorçage de l'effet corona depuis les aspérités pointues.

L'alimentation directe de l'électrode par un organe de prise de potentiel atmosphérique ne pouvant donc suffire, on connaît des moyens, soit combinés à cette prise de potentiel atmosphérique, soit totalement indépendants d'une telle prise de potentiel.

Les moyens connus à ce jour et se combinant à cette prise de potentiel consistent en des charges radioactives (FR-A 1 478 526 − figure 1) dont les rayons alpha renforcent, dans la zone de l'organe de prise de potentiel, l'ionisation de l'air et donc l'efficacité de cet organe.

Si l'efficacité de ces charges radioactives a pu être démontrée, leur utilisation ne peut toutefois plus s'envisager compte tenu des interdictions légales ou réglementaires édictées dans la plupart des pays à l'encontre de l'emploi des radio-éléments et ce, notamment pour la fabrication des paratonnerres (journal officiel de la République française du 20 octobre 1983 − arrêté du 11 octobre 1983).

Les moyens indépendants de la prise de potentiel atmosphérique nécessitent évidemment l'utilisation d'une autre source d'énergie, soit indépendante soit dépendante du paratonnerre.

La source indépendante consiste en une batterie d'alimentation ou en un générateur haute tension qui, faute d'opérations de maintenance, rend rapidement le paratonnerre inefficace.

La source dépendante du paratonnerre consiste par exemple en un dispositif piézo-électrique sur lequel une pression mécanique est exercée par la force du vent (FR-A 2 543 370) mais l'apparition de ce vent à l'approche de l'orage est aléatoire et rend le paratonnerre peu fiable.

Pour faire en sorte que la pointe du paratonnerre émette, plus rapidement, des charges électriques, en plus des moyens précités agissant sur au moins une électrode, on connaît d'autres moyens agissant quant à eux directement sur la pointe du paratonnerre.

Certains de ces autres moyens connus font simplement appel à des charges radioactives qui, autour de la pointe du paratonnerre, favorisent l'ionisation de l'air ambiant (FR-A 1 478 526 figure 2) ou d'un gaz pulsé (FR-A 2 285 008) mais, comme les paratonnerres à électrode en faisant usage sont frappés de la même interdiction.

D'autres moyens font appel à une source extérieure, telle une batterie ou un générateur à haute tension (FR-A 907 037 et EP-A 60 756), aux bornes de laquelle sont reliées, d'une part, la pointe et, d'autre part, la terre, tandis que la pointe, alimentée par la source extérieure est isolée de la descente du paratonnerre par un diélectrique s'opposant au passage des décharges haute tension issues de la source mais laissant bien entendu passer les décharges principales de l'orage.

Malheureusement, nécessitant une source d'alimentation électrique extérieure, de même que cela a été vu plus haut, ces moyens impliquent de nombreuses opérations de maintenance, difficilement supportables au plan financier.

On connaît également un matériel de protection contre la foudre (EP-A 0 139 575) dans lequel, pour alimenter la pointe du paratonnerre, on utilise périodiquement l'énergie qui, entretemps, a été accumulée dans un condensateur.

A cet effet, ce matériel comprend un circuit de relaxation scindant le cycle de fonctionnement en deux phases dont une phase où, étant chargé par la tension captée par la pointe du paratonnerre jouant alors le rôle d'un organe de prise de potentiel, le condensateur s'écarte de son état initial et une phase où, par décharge dans la pointe du paratonnerre, le condensateur retourne spontanément à son état initial.

Pour tenter qu'au moins l'une d'elles ait lieu en temps utile, les décharges sont fréquentes et, par exemple, interviennent toutes les secondes.

De ce fait, l'énergie accumulée entre deux décharges reste trop faible pour être suffisamment efficace.

Un résultat que l'invention vise à obtenir est un procédé de protection contre la foudre qui, de manière autonome et donc sans faire appel à une source d'énergie extérieure ni à des éléments radioactifs agit de manière fiable juste au moment où il va y avoir danger d'une décharge principale dans la zone protégée.

Dans l'application au paratonnerre, un résultat de l'invention est de fournir l'énergie nécessaire à l'amorçage, par anticipation de l'effet corona.

A cet effet, elle a pour objet un procédé du type précité, selon lequel procédé:

− avec l'organe de prise de potentiel, on capte une tension dont la valeur évolue relativement de même manière que le champ atmosphérique dans lequel est placé le dit organe,
− avec la tension ainsi captée, on charge progressivement au moins un condensateur puis,
− avec l'énergie ainsi accumulée, on alimente le matériel de protection contre la foudre,

ce procédé étant notamment caractérisé en ce que:

− sachant que si à l'approche d'un nuage orageux, la tension captée reste dans une plage de tensions relativement basses dite plage inférieure, dès que la menace de la chute de la foudre à l'endroit considéré devient réelle, la tension captée progressera jusque et dans une plage de tensions supérieures à celles de la plage dite inférieure et que cette progression s'opérera avec un gradient de potentiel capté par rapport au temps qui sera trés important,
− dans la plage supérieure de tensions, on surveille l'évolution du gradient du potentiel capté par rapport au temps puis,
− seulement, lorsqu'on constate que le gradient de potentiel capté par rapport au temps s'élève au delà d'un seuil prédéterminé, on commande la décharge de la capacité du condensateur dans le circuit d'alimentation du matériel de protection contre la foudre.

Elle a également pour objet les moyens en vue de la mise en œuvre de ce procédé et les matériels de protection contre la foudre comprenant ces moyens.

Elle sera bien comprise à l'aide de la description ci-après faite à titre d'exemple non limitatif, en regard du dessin ci-annexé qui représente schématiquement:

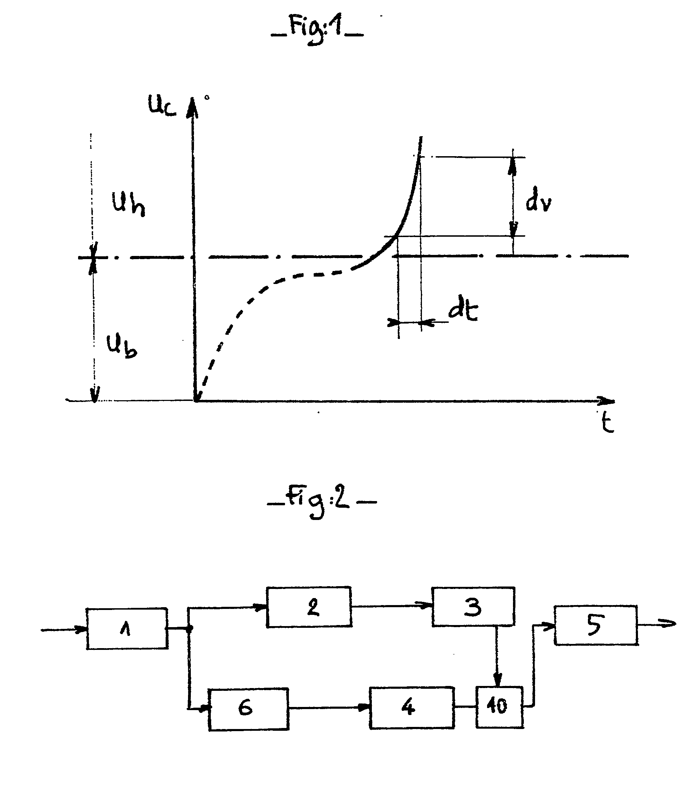

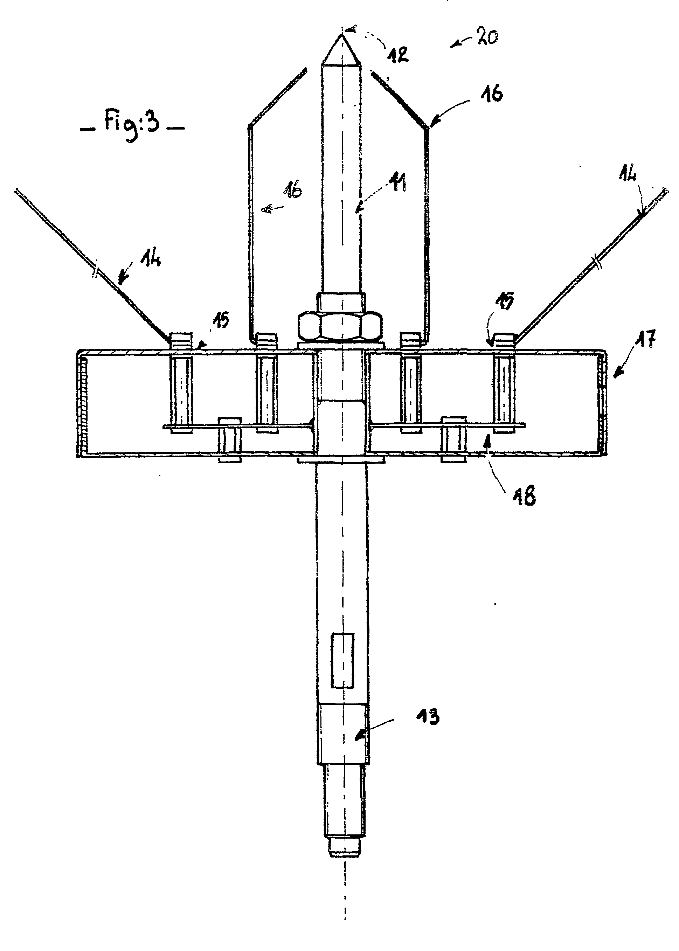

− figure 1: une forme d'évolution dans le temps de la tension captée,
− figure 2: le schéma bloc du circuit et des composants du moyen de mise en œuvre du procédé selon l'invention,

– figure 3: un paratonnerre pourvu de ces moyens,

– figure 4: le schéma détaillé d'un mode particulier de réalisation appliqué à la protection contre les orages dits positifs,

– figure 5: le schéma détaillé d'un mode particulier de réalisation appliqué à la protection contre les orages dits négatifs.

En se rapportant au dessin (figure 2) on voit que les moyens de mise en œuvre du procédé comprennent, de manière connue, un organe 1 de prise de potentiel atmosphérique.

On sait que, par temps d'orage, avant même qu'il y ait une menace réelle de chute de la foudre, le champ atmosphérique devient suffisant pour qu'il y ait, au moins dans certaines zones, libération de charges électriques qui, par choc, ioniseront l'air.

Dès que, dans la zone où agit l'organe de prise de potentiels, l'air est faiblement ionisé, il capte une tension $U_c$.

Au lieu qu'avec la tension captée $U_c$, on alimente directement un matériel de protection contre la foudre tel un paratonnerre, on charge au moins un condensateur 4 dont, comme indiqué plus loin, le circuit de décharge n'alimentera qu'ultérieurement le matériel de protection contre la foudre.

Evidemment, on place de préférence cet organe 1 dans une zone où, par tout moyen connu, l'ionisation de l'air est favorisée, telle une zone avoisinant une pièce conductrice 12 ou 20 située à une certaine hauteur du sol et reliée à la terre de manière que, par effet de pointe, le champ atmosphérique soit, autour de cette pointe, concentré et anticipe ainsi l'émission de charges électriques.

Avant qu'il y ait menace réelle de chute de la foudre, cette tension captée $U_c$ évolue de manière variable selon les orages mais demeure néanmoins dans une plage de tensions relativement basses dite plage inférieure $U_b$. C'est du fait de cette évolution variable que la courbe n'a en fait qu'été symbolisée (voir traits interrompus).

Ce n'est que quelques dizaines de microsecondes avant qu'il y ait menace réelle de chute de la foudre en un endroit déterminé que le champ atmosphérique en cet endroit subit une augmentation brutale qui, donc, se répercutera sur la tension captée $U_c$. Celle-ci s'élèvera alors en progressant jusque et dans une plage de tension $U_h$ supérieure à celle $U_b$ où elle se situait jusqu'alors et ce avec un gradient (dv/dt) de potentiel capté par rapport au temps qui sera très important.

Selon une caractéristique essentielle de l'invention, dans la plage supérieure $U_h$ de tensions, on surveille l'évolution par rapport au temps du potentiel capté et dès que le gradient s'élève au-delà d'un seuil prédéterminé, on commande la décharge de la capacité 4 dans le circuit d'alimentation du matériel de protection contre la foudre.

Aux bornes du condensateur, la tension augmente quant à elle progressivement, vers la tension du seuil à laquelle elle se stabilise, jusqu'au moment où le franchissement du seuil précité étant détecté, par décharge, elle chutera en attendant de remonter à nouveau.

Dans l'application au paratonnerre, cette décharge du condensateur se manifeste sous la forme d'une décharge électrique à sa pointe afin d'assurer par une émission intense de charges électriques une ionisation de l'air et l'anticipation de l'amorçage de l'effet corona.

De préférence, en combinaison avec un moyen 12, 20 de nature à favoriser l'ionisation de l'air, tel une pointe 12, 20 reliée à la terre créant autour d'elle une concentration du champ atmosphérique, les moyens en vue de la mise en œuvre de ce procédé comprennent (figures 2 et 3) au moins un organe 1, 14 de prise de potentiel atmosphérique de préférence dans le champ atmosphérique régnant au voisinage dudit moyen 12, 20 de nature à favoriser l'ionisation de l'air.

Ils sont caractérisés en ce que, relié à cet organe 1 de prise de potentiel, ils comprennent au moins un circuit avec:

– d'une part, un détecteur 3 du dépassement du seuil prédéterminé pour le gradient (dv/dt) de potentiel capté par rapport au temps "t" et,

– d'autre part, au moins un condensateur 4 dont le circuit de décharge est, par un circuit de commande 10 placé sous le contrôle du détecteur 3 relié au matériel de protection contre la foudre.

En amont du condensateur 4, on trouvera avantageusement un filtre 6 sélectionnant les tensions de la plage inférieure $U_b$.

De même, en amont du détecteur 3, on trouvera un filtre 2 sélectionnant les tensions de la plage supérieure $U_h$.

Dans le cas où les moyens comprennent plusieurs condensateurs, ceux-ci sont évidemment montés en parallèle de manière à additionner leur capacité.

On constate que la première des originalités de ces moyens de mise en œuvre du procédé réside dans le fait qu'on dispose par temps d'orage d'une véritable source d'énergie autonome constituée par capacité, véritable réservoir qui se charge et se décharge en libérant toute son énergie juste au moment où il y a un risque très important, c'est-à-dire juste avant qu'un "précurseur " risque de boucler le circuit de décharge de la foudre.

On sait, par ailleurs, que les orages peuvent, selon les polarités respectives des nuages et du sol, être de type positif ou négatif.

Pour que, dans sa version commerciale, le matériel de protection prenne en compte ces deux types d'orages, dans la limite bien sûr où des composants du circuit tels des diodes ont un sens de montage qui est fonction de cette polarité, les moyens de l'invention pourront avantageusement comprendre au moins un ensemble de deux circuits similaires, par exemple juxtaposés et/ou superposés, l'un d'eux étant adapté pour les orages dits négatifs, l'autre étant adapté pour les orages dits positifs.

Il va de soi que les moyens peuvent être constitués soit d'un seul circuit ou ensemble de circuits mixtes (orages positifs et négatifs) soit de plusieurs circuits ou ensembles de circuits, par exemple calibrés différemment de façon à réaliser des déclenchements par étage.

Dans la réalité, on pourra se contenter de deux ensembles calibrés l'un par rapport à l'autre avec des constantes de temps différents pour assurer le maximum d'efficacité au cas où deux coups de foudre exceptionnellement très rapprochés l'un par rapport à l'autre viendraient à apparaître dans les mêmes lieux.

Sur la carte électronique figureront, d'autre part, toutes les protections utiles connues de l'homme de métier pour assurer le bon fonctionnement permanent de chacun des composants.

Dans l'application au paratonnerre, la pointe 20 concentrant le champ et favorisant l'ionisation de l'air dans la zone de prise de potentiel pourra bien entendu être constitué par la pointe 12 du paratonnerre sous réserves bien entendu que celle-ci soit reliée à la terre. Dans ce cas, le circuit d'alimentation 5 sera relié à au moins une électrode 16 réalisant avec la pointe 12 un générateur de décharges électriques intenses.

Dans le cas, où le circuit d'alimentation 5 est directement relié à la pointe 12 du paratonnerre, celle-ci étant alors isolée de la terre pour les tensions inférieures à celle de la foudre, il est nécessaire que la pointe 20 du circuit soit alors constituée par une pièce distincte de la pointe 12 du paratonnerre.

Le cycle de chargement et de déchargement de la capacité étant automatiquement répétitif, il va de soi qu'une autre particularité des moyens de l'invention tient dans le fait qu'il est possible de maîtriser le déclenchement d'électrons dans un laps de temps très court et avec une précision remarquable calibrée en laboratoire.

Les composants étant statiques, on conçoit tous les avantages liés à la fiabilité, la disponibilité, la sécurité et la maintenance.

Dans sa version avec au moins une électrode, ce paratonnerre se composera dans son ensemble, par exemple, d'une tige 11 terminée en forme de pointe 12 et reliée à la terre par une connexion 13 et d'au moins une prise de potentiel 14 soigneusement isolée de la pointe par des isolateurs 15, de tout type connu, choisis pour leur qualité diélectrique et leur parfaite résistance dans le temps aux agents atmosphériques et aux agents luminescents (rayons ultra-violets).

Au moins une électrode d'étincellage 16 est disposée près de la pointe 12 et fixée, comme les prises de potentiel 14 de manière isolée par rapport à la pointe 12.

Ces électrodes 16 pourront, à cet effet, être disposées sur un support isolant qui présentera, en outre, l'avantage de fixer la distance entre la pointe 12 et les électrodes 16 de manière parfaitement constante.

Les organes 14 de prise de potentiel et les électrodes 16 sont, par l'intermédiaire de leurs moyens d'isolation, supportés par un carénage de protection 17 qui s'enfile sur la pointe 12 et qui contient la carte 18 avec le circuit imprimé ou cablé et les composants électroniques.

Le carénage de protection 17 sera, de préférence, métallique, inoxydable, parfaitement étanche aux intempéries avec éventuellement un traitement de surface tel un nickelage, pour offrir aux composants le maximum de protection contre les courants induits dus au passage de la foudre ou les effets capacitifs.

Le carénage de protection 17 constituée déjà à lui seul une excellente protection du type "cage de Faraday"; il est néanmoins concevable d'envisager un carénage en matière plastique ou en matériaux composites présentant tous les avantages de la version métallique.

Dans la version commerciale, la carte 18 et les composants électroniques seront noyés dans une résine choisie pour ses qualités diélectriques et pour son excellente résistance aux ondes de choc.

La résine sera, d'une part, insensible aux paramètres atmosphériques du type humidité pour assurer un fonctionnement étanche de l'ensemble.

Elle présentera en outre l'avantage de garder au dispositif toutes ses qualités dans le temps (bonne tenue au vieillissement).

Outre, leur utilisation en combinaison avec un paratonnerre, on pourra avantageusement utiliser ces moyens dans des matériels relatifs par exemple à la sécurité des installations, notamment électriques, et suivant des formes très diverses.

Il est par exemple concevable d'appliquer ces moyens pour l'alimentation de matériels qui, par temps d'orage, assurent un délestage préventif d'installations importantes.

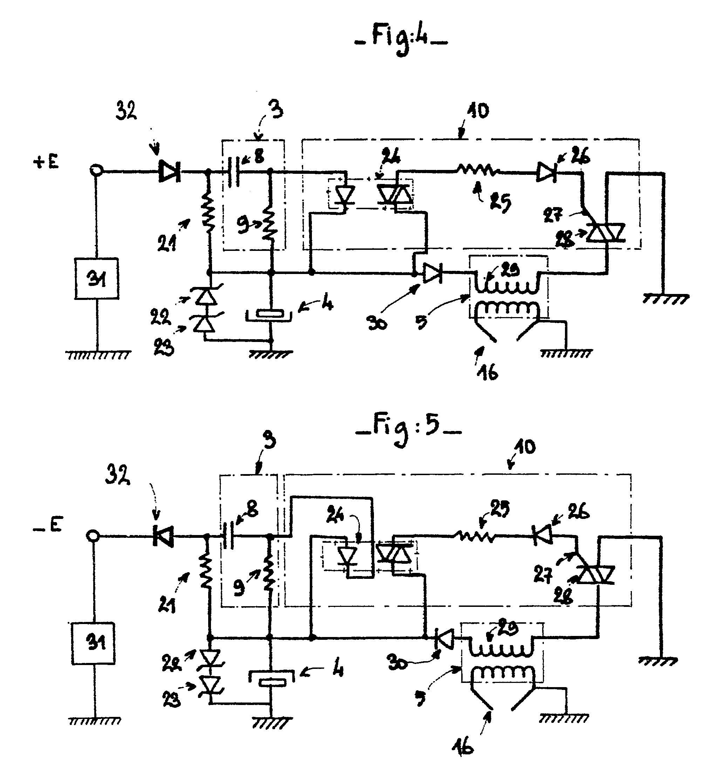

Dans une forme préférée de réalisation, (figures 4 et 5), la tension $U_c$ captée en sortie de la diode 32 (par exemple de type 1N4004) passe au travers d'une résistance 21 (par exemple de 750 ohms/3 watts) avant de charger le condensateur 4 (par exemple de 10 micro farads/400 volts) jusqu'à un seuil (par exemple de 300 volts) déterminé par les diodes zéner 22, 23.

Le détecteur 3 du dépassement du seuil prédéterminé pour le gradient (dv/dt) de potentiel capté par rapport au temps consiste, par exemple, en un filtre passe haut constitué d'un circuit RC monté en dérivateur.

L'homme de l'art sait déterminer les valeurs respectives de la résistance 9 et de la capacité 8 de manière que le détecteur réagisse avec une constante de temps déterminée et puisse ainsi être calibrée à une dizaine de microseconde près.

En cas de dépassement, le détecteur 3 transmet un signal au dispositif de commande 10 de la décharge du condensateur 4.

Le dispositif de commande 10 comprend avantageusement un optocoupleur 24 (par exemple du type MOC 3020) qui délivre en sortie au travers d'une résistance 25 (par exemple de 22 kilo ohms) une impulsion commandant la gachette 27 d'un triac 28 (par exemple de 8 ampères/400 volts).

Le triac devient alors passant et libère toute l'énergie accumulée dans la capacité 4 vers le circuit d'alimentation 5 par exemple au travers d'une self d'impulsion 29.

Une diode 26 (par exemple de type 1N4004) pla-

cée en amont de la gachette 27 du triac protègera alors celle-ci des surtensions dues à la self.

Entre le condensateur et la self 29 le circuit passera de même par une diode semblable 30 évitant l'oscillation entre la self et la capacité.

Par ailleurs, le dispositif comprend un dispositif 31 de protection contre les surtensions (tel un parasurtension UC350Q) qui protège les composants et le circuit contre les élévations de tensions (dans cet exemple au delà de 350 volts).

Les composants et circuits représentés aux figures 4 et 5 sont identiques, seules les diodes étant montées différemment pour tenir compte des orages positifs (figure 4) et négatifs (figure 5).

## Revendications

1. Procédé électronique de protection contre la foudre à l'aide de moyens comprenant au moins:
   - un circuit (5) d'alimentation d'un matériel de protection et,
   - un organe (1) de prise du potentiel atmosphérique placé à l'endroit à protéger,
   selon lequel procédé:
   - avec l'organe de prise de potentiel, on capte une tension ($U_c$) dont la valeur évolue relativement de même manière que le champ atmosphérique dans lequel est placé le dit organe,
   - avec la tension ($U_c$) ainsi captée, on charge progressivement au moins un condensateur (4) puis,
   - avec l'énergie ainsi accumulée, on alimente le matériel de protection contre la foudre,
   ce procédé étant caractérisé en ce que:
   - sachant que si à l'approche d'un nuage orageux la tension captée ($U_c$) reste dans une plage de tensions relativement basses dite plage inférieure ($U_b$), dès que la menace de la chute de la foudre à l'endroit considéré devient réelle, la tension captée progressera jusque et dans une plage ($U_h$) de tensions supérieures à celles de la plage dite inférieure ($U_b$) et que cette progression s'opérera avec un gradient de potentiel capté par rapport au temps qui sera très important,
   - dans la plage supérieure ($U_h$) de tensions, on surveille l'évolution du gradient (dv/dt) du potentiel capté par rapport au temps puis,
   - seulement, lorsqu'on constate que le gradient de potentiel capté par rapport au temps s'élève au delà d'un seuil prédéterminé, on commande la décharge de la capacité du condensateur dans le circuit d'alimentation du matériel de protection contre la foudre.

2. Moyens en vue de la mise en œuvre du procédé selon la revendication 1 comprenant au moins:
   - d'une part, un organe (1) de prise de potentiel atmosphérique, et,
   - d'autre part, au moins un condensateur (4) qui est par un circuit approprié, relié au matériel de protection contre la foudre,
   ces moyens étant caractérisés en ce que, reliés à l'organe (1) de prise de potentiel, ils comprennent encore au moins un circuit avec:
   - d'une part, un détecteur (3) du dépassement d'un seuil prédéterminé pour le gradient (dv/dt) de potentiel capté par rapport au temps (t) et,
   - d'autre part, placé sous le contrôle du détecteur (3) un dispositif (10) de commande de la décharge du condensateur.

3. Moyens selon la revendication 2 caractérisés en ce qu'ils comprennent en amont d'au moins l'un des composants que sont le condensateur (4) et le détecteur (3), un filtre (2 ou 6) sélectionnant les tensions de la plage de tensions ($U_b$ ou $U_h$) correspondant à ce composant.

4. Moyens selon la revendication 2 ou 3 caractérisés en ce que le détecteur (3) du dépassement du seuil prédéterminé pour le gradient (dv/dt) de potentiel capté par rapport au temps:
   - d'une part, consiste en un filtre passe haut constitué d'un circuit "résistance-condensateur" monté en dérivateur et réagissant avec une constante de temps déterminée par les valeurs respectives de ses constituants et,
   - d'autre part, en cas de dépassement, transmet au dispositif de commande (10) un signal de commande de la décharge du condensateur (4).

5. Moyens selon l'une quelconque des revendications 2 à 4 caractérisés en ce que le dispositif de commande (10) comprend un optocoupleur (24).

6. Moyens selon la revendication 5 caractérisés en ce que, en sortie, l'optocoupleur (24) délivre au travers d'une résistance (25) une impulsion commandant la gachette (27) d'un triac (28) intercalé sur le circuit de décharge.

7. Moyens selon l'une quelconque des revendications 2 à 6 dont au moins l'un des composants a un mode de montage qui dicte l'usage exclusif de ces composants et du circuit qui les porte, soit pour des orages dits négatifs, soit pour des orages dits positifs, caractérisés en ce qu'ils comprennent, avec leurs composants, au moins un ensemble de deux circuits similaires dont l'un est adapté pour les orages dits négatifs et l'autre adapté pour les orages dits positifs.

8. Moyens selon l'une quelconque des revendications 1 à 7 caractérisés en ce qu'ils comprennent au moins deux circuits dont les composants sont dans l'un et l'autre calibrés avec des constantes de temps différentes pour permettre des déclenchements par étage.

9. Matériel de protection contre la foudre caractérisé en ce qu'il est pourvu de moyens selon l'une quelconque des revendications 2 à 8.

10. Matériel de protection contre la foudre selon la revendication 9 comprenant:
    - une tige (11) terminée en forme de pointe (12),
    - au moins une prise de potentiel atmosphérique (14),
    ce matériel étant caractérisé:
    - en ce que la tige (11) est reliée à la terre par une connexion (13),
    - en ce que la prise de potentiel est soigneusement isolée de la pointe par des isolateurs (15), et
    - en ce qu'il comprend en outre:
    - au moins une électrode d'étincellage (16) disposée près de la pointe (12) et fixée de manière isolée par rapport à la pointe (12),

– au moins une carte (18) portant le détecteur de gradient de potentiel par rapport au temps et,
– un carénage de protection (17) qui s'enfile sur la pointe (12) et qui contient la carte (18).

**Claims**

1. Electronic process for protection against lightning, with the aid of means comprising at least:
- a supply circuit (5) for a protective material, and
- an element (1) for registering the atmospheric potential, disposed at the place to be protected,
in accordance with which process:
- with the element for registering the potential, a voltage ($U_c$) is picked up, whose value develops relatively in the same manner as the atmospheric field in which the said element is disposed,
- with the voltage ($U_c$) thus picked up, at least one capacitor (4) is charged progressively, then
- the energy thus accumulated is supplied to the material for protection against lightning,
this process being characterised in that
- knowing that although, at the approach of a storm cloud, the voltage picked up ($U_c$) remains within a range of relatively low voltages referred to as the lower range ($U_b$), as soon as the threat of lightning striking the place concerned becomes real, the voltage picked up will progress up to and into a range ($U_h$) of voltages higher than those of the range which is referred to as the lower range ($U_b$), and that this increase will be effected with a gradient of the potential picked up in relation to the time which will be very considerable,
- in the upper range ($U_h$) of voltages, the development of the gradient (dv/dt) of the potential picked up in relation to the time is monitored, then
- only when it is observed that the gradient of the potential picked up in relation to the time is rising beyond a predetermined threshold, is the discharge ordered of the capacitance of the capacitor in the supply circuit for the material for protection against lightning.

2. Means with a view to operating the process according to claim 1, comprising at least:
- on the one hand, an element (1) for registering the atmospheric potential, and
- on the other hand, at least one capacitor (4) which is connected, by an appropriate circuit, to the material for protection against lightning,
these means being characterised in that, connected to the element (1) for registering the potential, they furthermore comprise at least one circuit with:
- on the one hand, a detector (3) for detecting when a predetermined threshold for the gradient (dv/dt) of the potential picked up in relation to the time (t) has been exceeded, and
- on the other hand, placed under the control of the detector (3), a device (10) for controlling the discharge of the capacitor.

3. Means according to claim 2, characterised in that they comprise, upstream of at least one of the components constituted by the capacitor (4) and the detector (3), a filter (2 or 6) which selects the voltages of the range of voltages ($U_b$ or $U_h$) corresponding to this component.

4. Means according to claim 2 or 3, characterised in that the detector (3) for detecting when the predetermined threshold for the gradient (dv/dt) of the potential picked up in relation to the time has been exceeded:
- on the one hand, consists of a high-pass filter constituted by a "resistor-capacitor" circuit assembled in shunt manner and reacting with a time-constant determined by the respective values of its constituents, and
- on the other hand, in the event of the threshold being exceeded, transmits to the control device (10) a signal ordering the discharge of the capacitor (4).

5. Means according to any one of the claims 2 to 4, characterised in that the control device (10) comprises an optocoupler (24).

6. Means according to claim 5, characterised in that, at the output, the optocoupler (24) delivers, through a resistor (25), an impulse controlling the gate (27) of a triac (28) intercalated on the discharge circuit.

7. Means according to any one of the claims 2 to 6, whereof at least one of the components has a mode of assembly which dictates the exclusive use of these components and of the circuit which carries them, either for storms which are referred to as negative, or for storms which are referred to as positive, characterised in that they comprise, with their components, at least one assembly of two similar circuits, one of which is adapted for storms which are referred to as negative, and the other of which is adapted for storms which are referred to as positive.

8. Means according to any one of the claims 1 to 7, characterised in that they comprise at least two circuits whose components are, in the one and in the other, calibrated with different time-constants, in order to enable circuit-breakings to occur in stages.

9. Material for protection against lightning, characterised in that it is provided with means according to any one of the claims 2 to 8.

10. Material for protection against lightning, according to claim 9, comprising:
- a rod (11) which terminates in the shape of a point (12),
- at least one means (14) for registering the atmospheric potential,
this material being characterised:
- in that the rod (11) is connected to the earth by a connection (13),
- in that the means for registering the potential is carefully insulated from the point, by insulators (15), and
- in that it furthermore comprises:
- at least one electrical spark-discharge electrode (16) disposed near to the point (12) and fixed in an insulated manner in relation to the point (12),
- at least one card (18) carrying the detector for the gradient of the potential in relation to the time, and

- a protective cover (17) which is inserted onto the point (12) and which contains the card (18).

## Patentansprüche

1. Elektronisches Blitzschutzverfahren mit Hilfe von Mitteln, die mindestens enthalten:
- einen Speisestromkreis (5) für eine Schutzanlage und
- eine Abgreifstelle (1) für das atmosphärische Potential, die an der zu schützenden Stelle angebracht ist,
wobei man
- mit der Abgreifstelle des Potentials eine Spannung abgreift, deren Wert sich relativ in gleicher Weise ändert wie das atmosphärische Feld, an welchem die Abgreifstelle angebracht ist,
- mit der erhaltenen Spannung ($U_c$) fortschreitend mindestens einen Kondensator (4) auflädt,
- mit der so gesammelten Energie die Blitzschutzanlage speist,
wobei das Verfahren dadurch gekennzeichnet ist,
- daß in Kenntnis der Tatsache, daß wenn sich eine Gewitterwolke nähert, die abgegriffene Spannung ($U_c$) in einem relativ niedrigen Bereich bleibt, genannt unterer Bereich ($U_b$), sobald die Gefahr des Blitzschlags an der betrachteten Stelle real wird, die abgegriffene Spannung ansteigt bis in einen Spannungsbereich ($U_h$), der höher liegt als derjenige des unteren Bereichs ($U_b$), und daß dieser Anstieg mit einem Spannungsgradienten gegen die Zeit erfolgt, der sehr beträchtlich ist,
- daß im höchsten Spannungsbereich ($U_h$) der Verlauf des abgegriffenen Spannungsgradienten (dv/dt) gegen die Zeit überwacht wird,
- nur wenn festgestellt wird, daß der Spannungsgradient gegen die Zeit über einen bestimmten Wert ansteigt, eine Entladung der Kondensator-Kapazität des Versorgungsschaltkreises der Blitzschutzanlage veranlaßt wird.

2. Mittel zur Ausführung des Verfahrens nach Anspruch 1, enthaltend mindestens:
- einerseits eine Abgreifstelle (1) für ein atmosphärisches Potential und
- andererseits einen Kondensator (4), der mit einem geeigneten Schaltkreis mit der Blitzschutzanlage verbunden ist,
wobei das Mittel dadurch gekennzeichnet ist,
daß es mindestens einen mit der Abgreifstelle (1) des Potentials verbundenen Schaltkreis enthält mit:
- einerseits einem Detektor (3) für den Nachweis des Überschreitens eines bestimmten Grenzwertes des Gradienten (dv/dt) gegen die Zeit (t) und
- anderseits einer Vorrichtung (10) zur Steuerung der Entladung des Kondensators, die vom Detektor (3) gesteuert wird.

3. Mittel nach Anspruch 2, dadurch gekennzeichnet,
daß es mindestens (mehr als) eines der folgenden Bauelemente enthält wie den Kondensator (4) und den Detektor (3), einen Filter (2 oder 6), der die Spannungen der Spannungsbereiche ($U_b$ oder $U_h$) entsprechend diesem Bauelement auswählt.

4. Mittel nach Anspruch 2 oder 3, dadurch gekennzeichnet,
daß der Detektor (3) für das Überschreiten des Grenzwerts des abgegriffenen Spannungsgradienten (dv/dt) gegen die Zeit
- einerseits aus einem Hochpaßfilter besteht, bestehend aus einem an einem Abzweiger befestigten "Widerstand-Kondensator"-Schaltkreis, der mit einer bestimmten Zeitkonstante reagiert, die bestimmt ist durch die jeweiligen Werte seiner Bestandteile, und
- andererseits im Fall der Überschreitung ein Befehlssignal zur Entladung des Kondensators (4) abgibt.

5. Mittel nach einem der Ansprüche 2 bis 4, dadurch gekennzeichnet,
daß die Steuerungsvorrichtung (10) einen Optokoppler (24) enthält.

6. Mittel nach Anspruch 5, dadurch gekennzeichnet,
daß am Ausgang der Optokoppler (24) über einen Widerstand (25) einen Impuls abgibt, der das Betätigungsorgan (27) eines Triacs (28) steuert, der zwischen den Entladungsschaltkreis geschaltet ist.

7. Mittel nach einem der Ansprüche 2 bis 6, in dem mindestens eine der Komponenten so montiert ist, daß entweder bei sogenannten negativen oder positiven Gewittern zwangsläufig eine ausschließliche Verwendung dieser Komponenten und des sie aufweisenden Schaltkreises erfolgt, dadurch gekennzeichnet,
daß es mit seinen Komponenten mindestens eine Gruppe von zwei vergleichbaren Schaltkreisen enthält, von denen die eine geeignet ist, für sogenannte negative Gewitter und die andere für sogenannte positive Gewitter.

8. Mittel nach einem der Ansprüche 1 bis 7, dadurch gekennzeichnet,
daß es mindestens zwei Schaltkreise enthält, deren Komponenten in dem einen und in dem anderen mit unterschiedlichen Zeitkonstanten geeicht sind, um ein stufenweises Auslösen zu ermöglichen.

9. Blitzschutzanlage, dadurch gekennzeichnet,
daß sie aus Mitteln nach irgendeinem der Ansprüche 2 bis 8 besteht.

10. Blitzschutzanlage nach Anspruch 9, aufweisend:
- einen Stab (11), dessen Ende in Form einer Spitze (12) ausgebildet ist,
- mindestens eine Abgreifstelle (14) für das atmosphärische Potential,
wobei die Anlage dadurch gekennzeichnet ist,
- daß der Stab (11) über eine Verbindung (13) mit der Erde verbunden ist,
- daß die Abgreifstelle des Potentials gegenüber der Spitze sorgfältig mit Isolatoren (15) isoliert ist und
- daß sie weiterhin aufweist:
- mindestens eine Funkenelektrode (16), die an der Spitze (12) angeordnet und isoliert an ihr befestigt ist,
- mindestens eine Karte (18), die den Detektor für den Potentialgradienten gegenüber der Zeit trägt, und
– eine Schutzverkleidung (17), die sich um die Spitze (12) erstreckt und die Karte (18) enthält.

_Fig:1_

_Fig:2_

_ Fig:3 _

_Fig:4_

_Fig:5_